# EUROPEAN PATENT SPECIFICATION

(11) **EP 3 908 951 B1**
(45) Date of publication and mention of the grant of the patent: **26.08.2026**
(21) Application number: 20704346.4
(22) Date of filing: 07.01.2020
(51) Int. Cl.: G06F 21/60, G06Q 10/10, G06F 21/64, H04L 9/40, G06Q 10/107, H04L 51/08, H04L 51/23

(54) **METHOD FOR CERTIFYING TRANSFER AND CONTENT OF A TRANSFERRED FILE**
VERFAHREN ZUR ZERTIFIZIERUNG VON TRANSFER UND INHALT EINER ÜBERTRAGENEN DATEI
PROCÉDÉ DE CERTIFICATION DE TRANSFERT ET DE CONTENU D'UN FICHIER TRANSFÉRÉ

(30) Priority: 08.01.2019 IT 201900000154
(43) Date of publication of application: 17.11.2021
(73) Proprietor: Get S.r.l., 00185 Roma (IT)
(72) Inventor: PALOMBO, Giuliano, 00185 Roma (IT); BILOTTA, Tommaso, 00047 Marino (RM) (IT); GIANCOTTI, Ernesto, 00171 Roma (IT)
(74) Representative: De Ros, Alberto
(86) International application number: PCT/IB2020/050073
(87) International publication number: WO 2020/144560

(56) References cited:
- US-A1- 2002 007 453
- US-A1- 2011 167 271
- US-B1- 6 199 052

## Description

### FIELD OF THE INVENTION

"The present invention relates to a method for certifying transfer and content of a transferred file.

### STATE OF THE ART

Nowadays, the transfer of information and documents is done almost exclusively electronically.

In this case, the information and/or the documents to be transferred are grouped into one or more so-called "files".

The files to be transferred can also be large-sized, for example up to 1 Gbyte and beyond.

To date, there is no easy way to transfer files through which a "sender" can prove that he has transferred a specific file with a specific content to a "receiver"; this need is deeply felt.

This statement is true if "sender" and "receiver" mean electronic terminals (for example, desktops, laptops, tablets, smartphones) connected to a telematic network, in particular Internet.

This statement is even more true if "sender" and "receiver" mean natural persons.

It should be pointed out that the so-called "certified electronic mail", abbreviated as PEC, has spread for a few years (moreover only in a few countries including Italy). This service guarantees the transfer of texts between users if they have a PEC box but does not provide any guarantee on the content of the files attached to the e-mail message. In order for a person to have a certified e-mail box, it is necessary he requests it from an institution authorized by a state authority, suitably certifying his identity.

Documents US6199052B1 and US2002007453A1 are relevant prior art in the technical field.

### ABSTRACT

The general object of the present invention is to meet this need.

In particular, a more specific object of the present invention is to meet this need even without particular prior preparatory activities either on the part of the sender or on the part of the receiver; in this case, it must be accepted that the guarantee level is lower.

These objects are achieved thanks to the method for certifying transfer and content of a file having the characteristics expressed by the appended claims which form an integral part of the present description.

The idea underpinning the present invention is to provide an electronic system which acts as a guarantor; the system guarantees not only that there has been a transfer of a file, but also the content of the transferred file. This idea can obviously be applied to the transfer of multiple files in a single transaction.

If the sender and/or the receiver are accredited by the electronic system (therefore they have done a prior preparatory activity), the system can provide a guarantee at a higher level.

Furthermore, depending on the needs, a different level of guarantee can be envisaged.

Electronic devices, designed to carry out operations provided for by the method, in particular a server and a user terminal, are also the object of the present invention.

### LIST OF FIGURES

The present invention shall become more readily apparent from the detailed description that follows to be considered together with the accompanying drawings in which:
Fig. 1 shows a block diagram of a system according to the present invention comprising, by way of example, a server and two user terminals,
Fig. 2 shows the system of Fig.1 in a first condition,
Fig. 3 shows the system of Fig.1 in a second condition following the first condition,
Fig. 4 shows the system of Fig.1 in a third condition following the second condition, and
Fig. 5 shows a flow chart of a method according to the present invention.

As can be easily understood, there are various ways of practically implementing the present invention which is defined in its main advantageous aspects in the appended claims and is not limited either to the following detailed description or to the appended claims.

### DETAILED DESCRIPTION

In the present description, "terminal" or "user terminal" mean in particular a desktop, a laptop, a tablet, or a smartphone, variously connectable to a telematic network, in particular the Internet.

In the present description, "application" means indifferently a software that can be run directly by an electronic computer (for example a user terminal) or a software that can be run indirectly by an electronic computer (for example a user terminal) thanks to a program interpreting it.

Below the expression "signed e-mail message" is used with reference to an e-mail message signed digitally by means of a key, in particular a cryptographic key. S/MIME, acronym of "Secure/Multipurpose Internet Mail Extensions", is one of the most popular standards for cryptography and digital signature of e-mail messages. Below the expression "certified e-mail" or "PEC" is used to refer to a particular type of e-mail that allows to give an e-mail message the same legal value as a traditional registered letter with acknowledgement of receipt, thus ensuring the proof of dispatch and delivery.

Various entities participate in the transmission of a PEC message: the sender, the receiver, the sender's provider, the receiver's provider, the Internet network, the PEC message.

The transmission of a PEC message follows the following steps:
- the sender prepares the PEC message and submits it to the sender provider; the sender provider recognizes the sender after its authentication, for example by entering a username and password;
- the sender provider verifies the formal correctness of the PEC message and, if so, returns the receipt of acceptance to the sender as acknowledgement of the dispatch of the message; the receipt is digitally signed by the provider;
- the sender provider sends the message to the receiver provider by inserting it in a signed transport envelope to allow the receiver provider to verify its inalterability during transport;
- the receiver provider, once the PEC message has been received, delivers a take-over receipt to the sender provider, attesting the handover between the two providers; the receiver provider verifies the correctness and integrity of the message upon receipt;
- if the message passes the above checks, it is delivered to the receiver's mailbox which can then read it;
- the sender receives a receipt of delivery attesting the availability of the message from the receiver; the receipt is digitally signed and attests the integrity of the content transmitted.

As said previously, the present invention relates to certifications connected to the transfer of one or more "end-to-end" files.

Typically and preferably, in the case of multiple files, there will be a certification for each file even if the transfer was made with a single transfer session.

Above, below and in the appended claims, reference is made, for simplicity's sake, to a single receiver. However, in the event that a transfer session involves the transfer of one or more files from a sender to a plurality of receivers, what is indicated applies to each receiver.

Assuming, for example, that there is a person, called "sender person", who wishes to transfer a file to another person, called "receiver person"; assuming also that the "sender person" may want or have to prove (in the future) with certainty that that file has been transferred to the "receiver person".

For a start, the transfer between two digitally identified subjects (in particular, a "digital sender" identified by credentials, typically a "user" + "password" pair, and a "digital receiver" identified by a telematic address, typically an email address) is taken into account; then, efforts will be made on how to be certain that the "digital sender" corresponds to the "sender person" and that the "digital receiver" corresponds to the "receiver person".

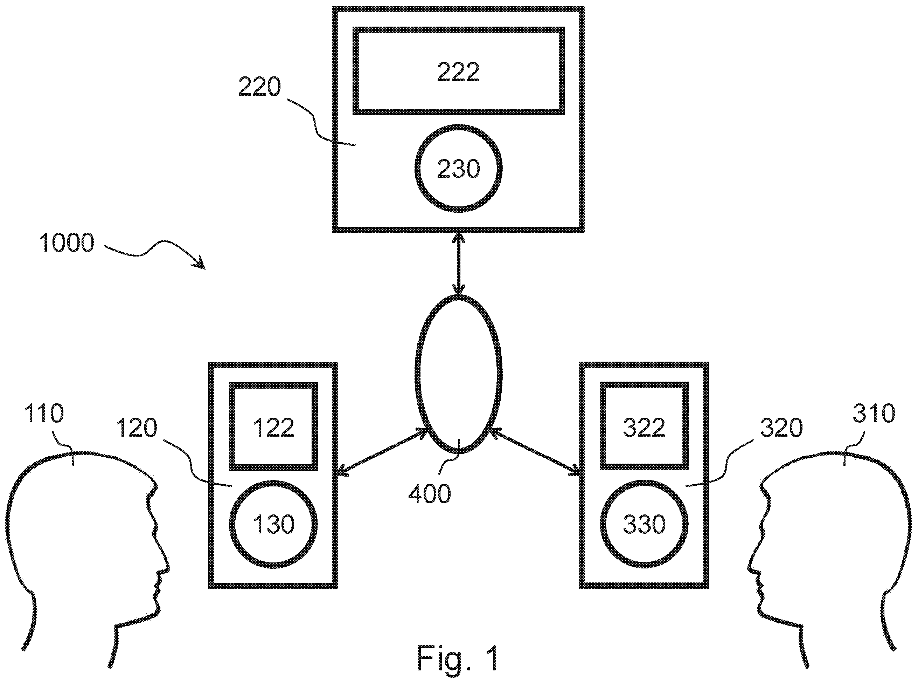

In Fig.1, the references have the following meaning:
1000 indicates a system according to the present invention as a whole,
110 indicates a sender person
120 indicates a sender terminal available to the sender person 110 and connected to the network 400
122 indicates a memory of the sender terminal 120
130 indicates a sender application running in the sender terminal 120
220 indicates a server connected to the network 400
222 indicates a memory of the server 220, in particular a database
230 indicates a server application running on the server 220
310 indicates a receiver person
320 indicates a receiver terminal available to the receiver person 310 and connected to the network 400
322 indicates a memory of the receiver terminal 320
330 indicates a receiver application running in the receiver terminal 320
400 indicates a telematic network, in particular the Internet

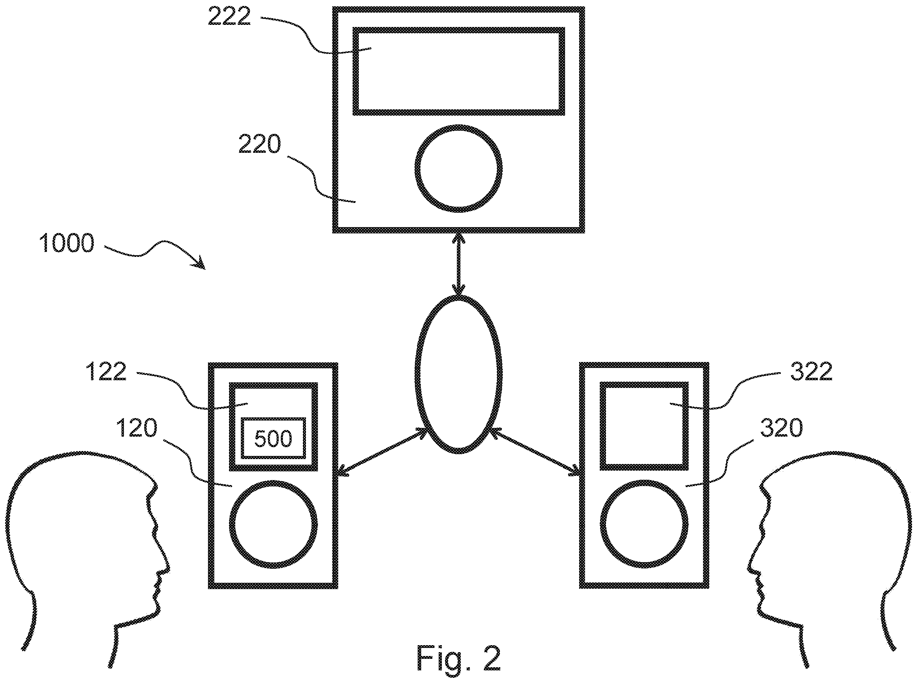

In Fig.2, the system 1000 of Fig.1 is shown conceptually when a file 500 (object of transfer according to the method of the present invention) is stored in the memory 122 of the sender terminal 120; it should be noted that the file 500 can be stored in encrypted form 501 in the terminal 120.

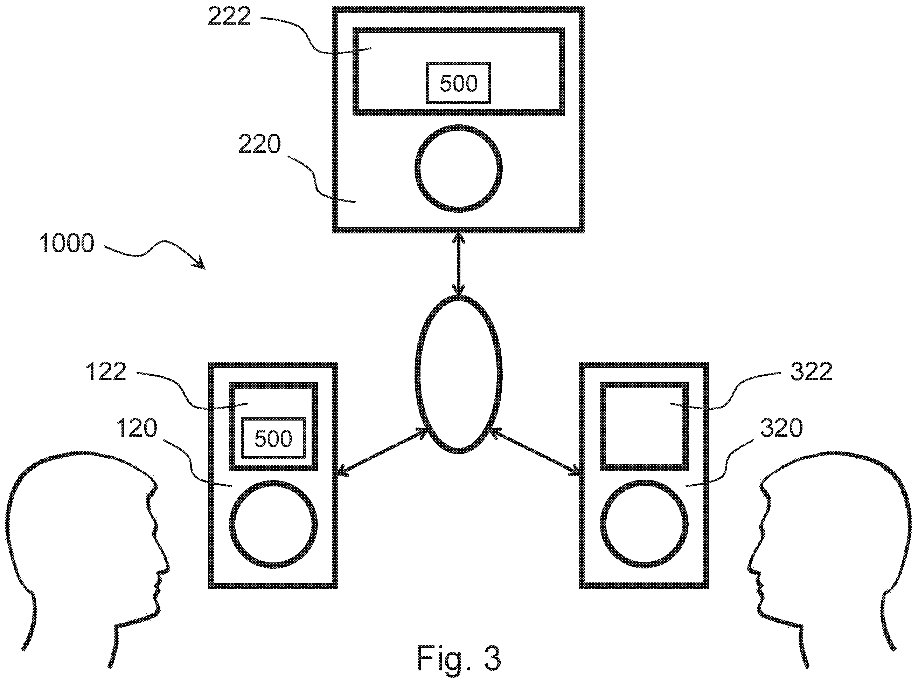

In Fig.3, the system 1000 of Fig.1 is shown conceptually when the file 500 is also stored in the memory 222 of the server 220; it should be noted that the file 500 can be stored in encrypted form 502 in the server 220. The condition of Fig.3 necessarily follows the condition of Fig.2.

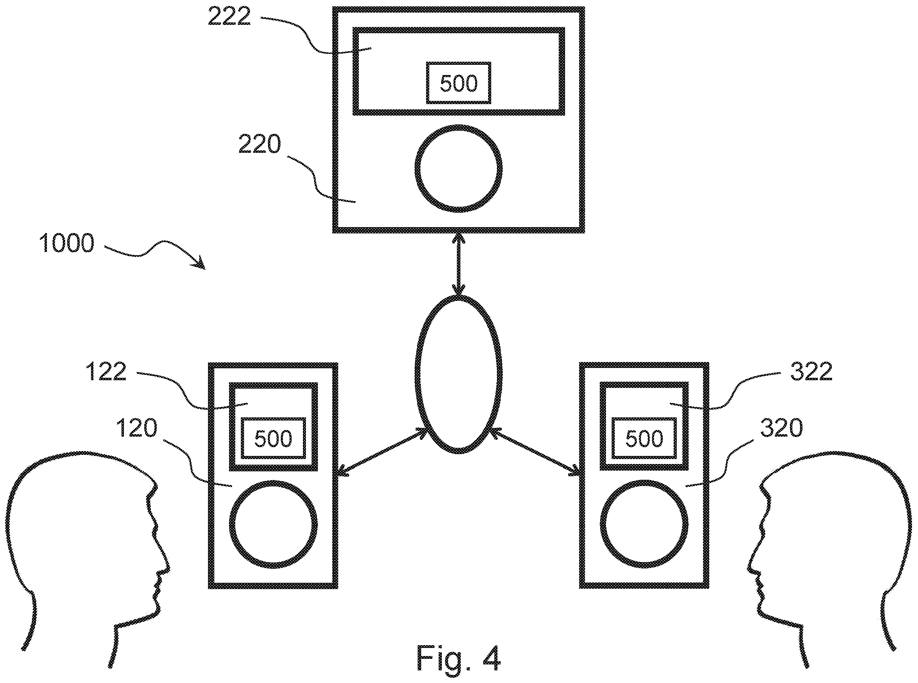

In Fig.4, the system 1000 of Fig.1 is shown conceptually when the file 500 is also stored in the memory 322 of the receiver terminal 320; it should be noted that the file 500 can be stored in encrypted form 503 in the terminal 320. The condition of Fig.4 necessarily follows the condition of Fig.3.

It should be noted that after the condition of Fig.4, there might be a further condition in which the file 500 is stored only in the memory 122 of the sender terminal 120 and in the memory 322 of the receiver terminal 320; this further condition would result from the deletion of the file 500 from the memory 222 of the server 220 carried out by the application 230.

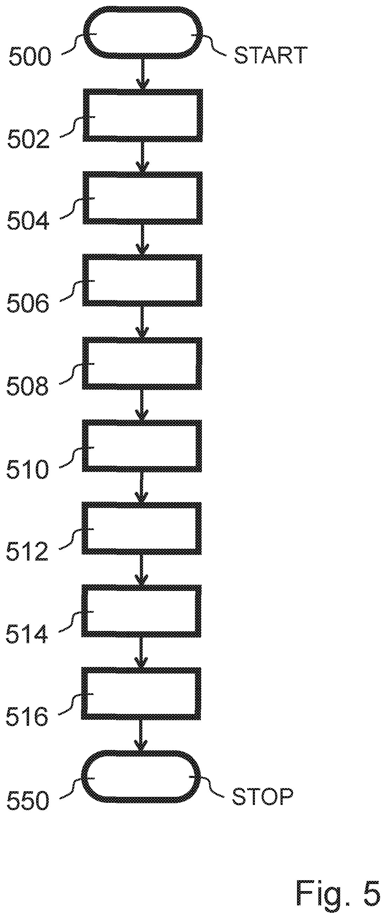

In general (but with reference to the example of figures 1-5), according to the present invention:
a) the application 130 connects to the application 230 on command of the person 110
b) the sender application 130 sends to the server application 230 a telematic address of the person 310, the file 500 in encrypted form and a file digest 500
c) the server application 230 verifies correctness and integrity of the received file, stores it, preferably in encrypted form, in the memory 222 and sends acknowledgment of receipt to the application 130 by secure message
d) the application 230 notifies to the person 310 the presence of a file destined to him by specific message, preferably secure, to his telematic address a) the application 330 connects to the application 230 on command of the person 310
f) the application 230 sends to the application 330 the file 500 in encrypted form and a file digest 500
g) the server application 330 verifies correctness and integrity of the received file, decrypts it if necessary, stores it in the memory 322 and sends acknowledgment of receipt to the application 230 by secure message
h) the application 230 sends confirmation of delivery to the application 130 by means of a specific secure message

It should be noted that it is also possible to calculate and transmit more than one digest for each file (for example a first digest calculated for example according to the BLAKE2 algorithm and a second digest calculated for example according to the SHA-3 algorithm); digests can be used by the sender terminal, the receiver terminal and the server in the same way except for an aspect that will be described later.

Encoding in steps "b" and/or "f" " is based on asymmetric cryptography preferably with cryptographic keys of at least 2048 bits; obviously, it is also possible to use symmetric cryptography or a combination of symmetric cryptography and asymmetric cryptography. In this case, in steps "a" and/or "e", there can be an exchange of cryptographic keys; according to alternative embodiments, the keys could already be present in the electronic devices since, for example, they are exchanged or received when subscribing to the service by one or both people.

The secure message in steps "c" and/or "d" and/or "f" and/or "g" is preferably a "certified e-mail" message; alternatively, it can be a signed (and possibly encrypted) e-mail message preferably by means of a random or pseudo-random code.

"Certified e-mail" is a very secure and reliable e-mail system that is widespread only in a few countries in the world, including Italy.

A known system for the generation of pseudo-random codes and the sharing of the same between two subjects is the so-called "security token" (often called more simply "token"); this system has spread mainly in the banking sector. A token is a generator of pseudo-random numeric codes at regular intervals (in the order of for example a few tens of seconds) according to an algorithm that, among the various factors, takes into account the passing of time thanks to an internal clock; other factors influencing the algorithm can be, for example, the serial number of the token; a token can be of the hardware or software type. If the present invention provides for the use of pseudo-random codes generated by a "token" system, there must be a first portion of a first "token" system associated with the server 220 and a second portion of a first "token" system associated with the sender terminal. 120 (so as to sign and verify the signature of at least the notification of step "c") as well as a first portion of a second "token" system associated with the receiver terminal 320 and a second portion of a second "token" system associated with the server 220 (so as to sign and verify the signature of at least the notification of step "g"); preferably, these "token" systems will be of the software type and the related programs will run in the sender terminal, in the receiver terminal and in the server.

There are therefore two particularly effective embodiments of the present invention. According to the first embodiment, the method always uses in any case signed (and possibly encrypted) e-mail messages by means of a pseudo-random code. According to the second embodiment, the method uses whenever possible (depending on the sender and receiver users using the service) "certified e-mail" messages and otherwise signed (and possibly encrypted) e-mail messages by means of a pseudo-random code.

It should be noted that, according to the present invention, more or less secure messages of a different nature cannot be excluded (for example a "call over HTTPS" or a "call encrypted over HTTP"). Clearly, the "security" of the message contributes to the level of certification that the server can provide. In the case in which signed e-mail messages are used (and not certified e-mail messages), it is advantageous that these messages are sent in copy or in carbon copy to an e-mail address, in particular certified e-mail, associated with the server; in this way, their traceability is better.

With regards to what has been said up to this point, the server is able to certify the transfer of a file and the content of the file transferred from a terminal in which a sender application is active to a terminal in which a receiver application is active. The sender application has connected to the server (more precisely to the server application) and has thus somehow authenticated itself; namely, based on this authentication the server is able to issue a certification. The receiver application has connected to the server (more precisely to the server application) and has thus somehow authenticated itself; namely, based on this authentication the server is able to issue a certification. Obviously, it is preferable that this "authentication" (in particular in steps "a" and/or "e") is to be understood in the strict sense, for example through user credentials (typically a "user" + "password" pair).

For a higher level of certification, it is necessary that step "a" provides that the server application verifies the identity of the sender person in particular through the sender application and/or step "e" provides that the server application verifies the identity of the receiver person in particular through the receiver application. To obtain this result, it is possible, for example, that the application provides for the entry of a code by the person using the terminal; this code can be received by SMS from the server on a person's mobile phone or generated by a hardware "token" owned by the person or generated by an active software "token", for example, on the person's smartphone. Alternatively, it is possible, for example, that the application provides for biometric identification. It is therefore understood that a high level of certification can be provided by the server in case the transfer of the file takes place between people who have subscribed to a service with the server.

The file digest in steps "b" and/or "f" can be calculated according to an algorithm of the type BLAKE or BLAKE2 or SHA-0 or SHA-1 or SHA-2 (which comprises SHA-224, SHA-256 , SHA-384 and SHA-512) or SHA-3 or other equivalent or higher cryptographic algorithms that will be devised in the future; the preferred algorithms are those that have not yet been "compromised" by the cryptanalysts and the most preferred algorithms are BLAKE2 and SHA-3. For simplicity's sake, the file digest in steps "b" and/or "f" can be calculated in exactly the same way and be therefore the same; however, it is not excluded that the calculation is done differently, for example through two algorithms of different type.

It is preferable that the connection in steps "a" and/or "e" provides for encrypted communication; in fact, during these steps the exchange of cryptographic keys can take place. This encrypted communication can be based, for simplicity's sake, on symmetric cryptography, but for example with cryptographic key "variable over time" (i.e. not fixed and predetermined). The cryptographic key "variable over time" can be determined at steps "a" and/or "e"; according to a first possibility, this cryptographic key or processing thereof (for example a digest thereof) can be generated locally by a hardware "token" or a software "token"; according to a second possibility, this cryptographic key or processing thereof (for example a digest thereof) can first be transmitted (for example by the server) and then received (for example by the terminal) by means of a text message from a cellular telephone system.

Advantageously, the server application creates a file transfer session identifier after step "a"; typically, this identifier is of the UUID type (= Universally Unique IDentifier). It is useful for the server application to communicate this identifier to the sender application (in this way it will be easier for the sender to request, in the future, any certifications from the server) and to the receiver application (in this way it will be easier for the receiver to specify to the server which file he wants).

Advantageously, in step "c" the file is stored in a memory area of the server identified by a path which contains the file digest and/or the transfer session identifier; in this way, it is very difficult (not to say impossible) to know where the files are stored in case of interception of communications between terminals and servers or in case of intrusion into the server. If several digests are used, the path can contain all digests, or only one of the digest chosen by the server (but preferably not known to the sender or the receiver).

In order to provide a precise (future and possible) certification of the transfer of a file and of the content of the transferred file, the server application typically stores, in a memory area of the server, the log of the operations related to a file transfer session (preferably of all operations), and preferably also the file digest and/or the file.

Typically and advantageously, any communication on the telematic network between the sender application and the server application and/or between the receiver application and the server application is based on a secure communication protocol. If a standard protocol is chosen, this can be, for example, HTTPS or SFTP or FTPS. Alternatively, a proprietary protocol can be developed and used.

It should be noted that up to this point it has been assumed that only one file had been transferred in a file transfer session. It cannot be excluded that, according to some embodiments of the present invention, in a single file transfer session a plurality of files or an entire "folder" are transferred.

The user applications according to the present invention could be integrated in software packages equipped with various functionalities including file transfer.

To implement the method of the present invention (according to any of its embodiments) suitably prepared electronic devices are required; in particular, a server, a sender user terminal and a receiver user terminal are required. User terminals can typically be desktops, laptops, tablets, or smartphones (the sender terminal can be completely different from the receiver terminal).

In general, the system of the present invention provides for a plurality of users, with their user terminals, who will request file transfer services to the same server. The system does not require that a user always correspond to the same user terminal; for example, a user can at one time ask the server to send a file from his smartphone, at another time ask the server to send another file from his desktop and at a later time ask the server for the receipt of an additional file on his tablet.

In general, the system according to the present invention provides that the sender person has a prior agreement with the server provider, but that the receiver person does not necessarily have a prior agreement with the server provider; however, if also the receiver person has a prior agreement with the server provider, the server can provide a better certification.

The present invention provides many arrangements for making the transfer of a file secure and for providing high guarantees on such a transfer; all or some of these measures can be used in combination.

The suitable arrangement of the electronic devices of the system of the present invention consists, in particular, in the presence of an "application", i.e. a software that can be run directly by an electronic computer or a software that can be run indirectly by an electronic computer thanks to a program interpreting it. As for the server, the application is typically a software that can be run directly. As for the user terminal, the application can be a software that can be run directly or a software that can be run indirectly; typically, if the person who is using the service does not have a prior agreement with the server provider, the application is a software that can be run indirectly.

It should be noted that the application must be present in the electronic device before the latter is used to carry out the method of the present invention. For example, the server application is present on the server from the beginning. For example, the sender application can be loaded for example from the Internet when a sender person decides to transmit a file to a receiver person (in particular shortly before step "a"). For example, the receiver application can be loaded for example from the Internet when a receiver person decides to receive a file from a sender person (in particular shortly before step "e").

The server application (230 in Fig. 1) is designed to carry out only some of the operations provided for by the method of the present invention when activated, in particular steps "b" (receipt of data), "c", "d", "f "," g "(receipt of acknowledgement)," h ".

The sender application (130 in Fig. 1) is designed to carry out only some of the operations provided for by the method of the present invention when activated, in particular steps "a", "b", "c" (receipt of acknowledgement), "h "(receipt of acknowledgement).

The receiver application (330 in Fig. 1) is designed to carry out only some of the operations provided for by the method of the present invention when activated, in particular steps "e", "f" (receipt of data), "g".

## Claims

1. Method for certifying transfer and content of a file (500) from a sender terminal (120) connected to a telematic network (400), in particular Internet, to a receiver terminal (320), connected to a telematic network (400), in particular Internet, through a server (220), comprising the steps of:
a) a sender application (130) running on the sender terminal (120) connects to a server application (230) running on the server (220) on command of a sender person (110)
b) the sender application (130) sends to the server application (230) a telematic address of a receiver person (310), the file (500) in encrypted form and a file digest (500)
c) the server application (230) verifies correctness and integrity of the received file, stores it, preferably in encrypted form, in a memory area (222) of the server (220) and sends acknowledgment of receipt to the sender application (130) by secure message
d) the server application (230) notifies to said receiver person (310) the presence of a file destined to him by specific message to said telematic address
e) a receiver application (330) running on the receiver terminal (320) connects to the server application (230) running on the server (220) on command of said receiver person (310)
f) the server application (230) sends to the receiver application (330) the file (500) in encrypted form and a file digest
g) the receiver application (330) verifies correctness and integrity of the received file, eventually decrypts it, stores it in a memory area (322) of the receiver terminal (320) and sends acknowledgment of receipt to the server application ( 230) by secure message
h) the server application (230) sends confirmation of delivery to the sender application (130) by means of a specific message
wherein said secure message is a certified e-mail message;
wherein the connection in step "a" also provides authentication;
wherein step "a" provides that the server application (230) verifies the identity of the sender person (110) through the sender application (130).

2. Method according to claim 1,
wherein the connection in step "e" also provides authentication;
wherein step "e" provides that the server application (230) verifies the identity of the receiver person (310) through the receiver application (330).

3. Method according to claim 1 or 2, wherein the encoding in steps "b" and/or "f" is based on asymmetric cryptography preferably with cryptographic keys of at least 2048 bits.

4. Method according to claim 3, wherein in steps "a" and/or "e" there is an exchange of cryptographic keys.

5. Method according to any one of the preceding claims, wherein said specific message in steps "d" and/or "h" is a certified e-mail message or an e-mail message signed by means of a random or pseudo-random code.

6. Method according to claim 5, wherein said signed e-mail message is sent in copy or in a hidden copy to an e-mail address, in particular certified e-mail address, associated with said server (220).

7. Method according to any one of the preceding claims, wherein the file digest in steps "b" and/or "f" is calculated according to a BLAKE algorithm or BLAKE2 or SHA-2 or SHA-3, preferably BLAKE2 or SHA-3.

8. Method according to any one of the preceding claims, wherein the file digest in steps "b" and/or "f" is calculated in exactly the same way and is therefore the same.

9. Method according to any one of the preceding claims, wherein the connection in steps "a" and/or "e" provides encrypted communication.

10. Method according to claim 9, wherein said encrypted communication is based on symmetric cryptography.

11. Method according to any one of the preceding claims, wherein the server application (230) creates a file transfer session identifier after step "a".

12. Method according to claim 11, wherein the server application (230) communicates said identifier both to said sender application (130) and to said receiver application (330).

13. Method according to claim 11, wherein in step "c" the file is stored in a memory area (222) of the server (220) identified by a path that contains the file digest and/or the transfer session identifier.

14. Method according to any one of the preceding claims, wherein each communication on the telematic network (400) between sender application (130) and server application (230) and/or between receiver application (330) and server application (230) is based on secure communication protocol, in particular HTTPS or SFTP or FTPS.

## Patentansprüche

1. Verfahren zum Zertifizieren einer Übertragung und eines Inhalts einer Datei (500) von einem Senderendgerät (120), das mit einem Telematiknetzwerk (400), insbesondere Internet, verbunden ist, an ein Empfängerendgerät (320), das mit einem Telematiknetzwerk (400), insbesondere Internet, verbunden ist, über einen Server (220), umfassend die Schritte:
a) eine Senderanwendung (130), die auf dem Senderendgerät (120) ausgeführt wird, verbindet sich auf Befehl einer Senderperson (110) mit einer Serveranwendung (230), die auf dem Server (220) ausgeführt wird
b) die Senderanwendung (130) sendet eine Telematikadresse einer Empfängerperson (310), die Datei (500) in verschlüsselter Form und einen Datei-Digest (500) an die Serveranwendung (230)
c) die Serveranwendung (230) überprüft eine Korrektheit und Integrität der empfangenen Datei, speichert diese, vorzugsweise in verschlüsselter Form, in einem Speicherbereich (222) des Servers (220) und sendet eine Empfangsbestätigung per sicherer Nachricht an die Senderanwendung (130)
d) die Serveranwendung (230) teilt der Empfängerperson (310) das Vorliegen einer für sie bestimmten Datei durch eine spezifische Nachricht an die Telematikadresse mit
e) eine Empfängeranwendung (330), die auf dem Empfängerendgerät (320) ausgeführt wird, verbindet sich auf Befehl der Empfängerperson (310) mit der Serveranwendung (230), die auf dem Server (220) ausgeführt wird
f) die Serveranwendung (230) sendet die Datei (500) in verschlüsselter Form und einen Datei-Digest an die Empfängeranwendung (330)
g) die Empfängeranwendung (330) überprüft die Korrektheit und Integrität der empfangenen Datei, entschlüsselt diese schließlich, speichert diese in einem Speicherbereich (322) des Empfängerendgeräts (320) und sendet die Empfangsbestätigung per sicherer Nachricht an die Serveranwendung (230)
h) die Serveranwendung (230) sendet mittels einer spezifischen Nachricht eine Zustellbestätigung an die Senderanwendung (130)
wobei die sichere Nachricht eine zertifizierte E-Mail-Nachricht ist;
wobei die Verbindung in Schritt "a" auch eine Authentifizierung bereitstellt;
wobei Schritt "a" vorsieht, dass die Serveranwendung (230) die Identität der Senderperson (110) über die Senderanwendung (130) überprüft.

2. Verfahren nach Anspruch 1,
wobei die Verbindung in Schritt "e" auch eine Authentifizierung bereitstellt;
wobei Schritt "e" vorsieht, dass die Serveranwendung (230) die Identität der Empfängerperson (310) über die Empfängeranwendung (330) überprüft.

3. Verfahren nach Anspruch 1 oder 2, wobei das Codieren in den Schritten "b" und/oder "f" auf asymmetrischer Kryptographie basiert, vorzugsweise mit kryptographischen Schlüsseln von mindestens 2048 Bit.

4. Verfahren nach Anspruch 3, wobei in den Schritten "a" und/oder "e" ein Austausch kryptografischer Schlüssel erfolgt.

5. Verfahren nach einem der vorstehenden Ansprüche, wobei die spezifische Nachricht in den Schritten "d" und/oder "h" eine zertifizierte E-Mail-Nachricht oder eine mittels eines zufälligen oder pseudozufälligen Codes signierte E-Mail-Nachricht ist.

6. Verfahren nach Anspruch 5, wobei die signierte E-Mail-Nachricht in Kopie oder in Blindkopie an eine E-Mail-Adresse, insbesondere zertifizierte E-Mail-Adresse, gesendet wird, die dem Server (220) zugeordnet ist.

7. Verfahren nach einem der vorstehenden Ansprüche, wobei der Datei-Digest in den Schritten "b" und/oder "f" gemäß einem BLAKE-Algorithmus oder BLAKE2 oder SHA-2 oder SHA-3, vorzugsweise BLAKE2 oder SHA-3, berechnet wird.

8. Verfahren nach einem der vorstehenden Ansprüche, wobei der Datei-Digest in den Schritten "b" und/oder "f" auf genau die gleiche Weise berechnet wird und daher gleich ist.

9. Verfahren nach einem der vorstehenden Ansprüche, wobei die Verbindung in den Schritten "a" und/oder "e" eine verschlüsselte Kommunikation bereitstellt.

10. Verfahren nach Anspruch 9, wobei die verschlüsselte Kommunikation auf symmetrischer Kryptographie basiert.

11. Verfahren nach einem der vorstehenden Ansprüche, wobei die Serveranwendung (230) nach Schritt "a" eine Dateiübertragungssitzungskennung erzeugt.

12. Verfahren nach Anspruch 11, wobei die Serveranwendung (230) die Kennung sowohl an die Senderanwendung (130) als auch an die Empfängeranwendung (330) kommuniziert.

13. Verfahren nach Anspruch 11, wobei in Schritt "c" die Datei in einem Speicherbereich (222) des Servers (220) gespeichert wird, der durch einen Pfad identifiziert wird, der den Datei-Digest und/oder die Übertragungssitzungskennung enthält.

14. Verfahren nach einem der vorstehenden Ansprüche, wobei jede Kommunikation auf dem Telematiknetzwerk (400) zwischen Senderanwendung (130) und Serveranwendung (230) und/oder zwischen Empfängeranwendung (330) und Serveranwendung (230) auf einem sicheren Kommunikationsprotokoll basiert, insbesondere HTTPS oder SFTP oder FTPS.

## Revendications

1. Procédé de certification de transfert et de contenu d'un fichier (500) d'un terminal expéditeur (120) connecté à un réseau télématique (400), en particulier à Internet, à un terminal destinataire (320), connecté à un réseau télématique (400), en particulier Internet, par le biais d'un serveur (220), comprenant les étapes suivantes :
a) une application expéditeur (130) s'exécutant sur le terminal expéditeur (120) se connecte à une application de serveur (230) s'exécutant sur le serveur (220) sur commande d'une personne expéditrice (110)
b) l'application expéditeur (130) envoie, à l'application de serveur (230), une adresse télématique d'une personne destinataire (310), le fichier (500) sous forme chiffrée et un condensé de fichier (500)
c) l'application de serveur (230) vérifie une exactitude et une intégrité du fichier reçu, le stocke, de préférence sous forme chiffrée, dans une zone de mémoire (222) du serveur (220) et envoie un accusé de réception à l'application expéditeur (130) par message sécurisé
d) l'application de serveur (230) notifie à ladite personne destinataire (310) la présence d'un fichier qui lui est destiné par message spécifique à ladite adresse télématique
e) une application destinataire (330) s'exécutant sur le terminal destinataire (320) se connecte à l'application de serveur (230) s'exécutant sur le serveur (220) sur commande de ladite personne destinataire (310)
f) l'application de serveur (230) envoie, à l'application destinataire (330), le fichier (500) sous forme chiffrée et un condensé de fichier
g) l'application destinataire (330) vérifie une exactitude et une intégrité du fichier reçu, le déchiffre éventuellement, le stocke dans une zone de mémoire (322) du terminal destinataire (320) et envoie un accusé de réception à l'application de serveur (230) par message sécurisé
h) l'application de serveur (230) envoie une confirmation de distribution à l'application expéditeur (130) au moyen d'un message spécifique
dans lequel ledit message sécurisé est un message électronique certifié ;
dans lequel la connexion lors de l'étape « a » fournit également une authentification ;
dans lequel l'étape « a » prévoit que l'application de serveur (230) vérifie l'identité de la personne expéditrice (110) par le biais de l'application expéditeur (130).

2. Procédé selon la revendication 1,
dans lequel la connexion lors de l'étape « e » fournit également une authentification ;
dans lequel l'étape « e » prévoit que l'application de serveur (230) vérifie l'identité de la personne destinataire (310) par le biais de l'application destinataire (330).

3. Procédé selon la revendication 1 ou 2, dans lequel le codage lors des étapes « b » et/ou « f » est basé sur une cryptographie asymétrique de préférence avec des clés cryptographiques d'au moins 2 048 bits.

4. Procédé selon la revendication 3, dans lequel, lors des étapes « a » et/ou « e », il existe un échange de clés cryptographiques.

5. Procédé selon l'une quelconque des revendications précédentes, dans lequel ledit message spécifique lors des étapes « d » et/ou « h » est un message électronique certifié ou un message électronique signé au moyen d'un code aléatoire ou pseudo-aléatoire.

6. Procédé selon la revendication 5, dans lequel ledit message électronique signé est envoyé en copie ou en copie cachée à une adresse électronique, en particulier une adresse électronique certifiée, associée audit serveur (220).

7. Procédé selon l'une quelconque des revendications précédentes, dans lequel le condensé de fichier lors des étapes « b » et/ou « f » est calculé selon un algorithme BLAKE ou BLAKE2 ou SHA-2 ou SHA-3, de préférence BLAKE2 ou SHA-3.

8. Procédé selon l'une quelconque des revendications précédentes, dans lequel le condensé de fichier lors des étapes « b » et/ou « f » est calculé exactement de la même manière et est donc le même.

9. Procédé selon l'une quelconque des revendications précédentes, dans lequel la connexion lors des étapes « a » et/ou « e » fournit une communication chiffrée.

10. Procédé selon la revendication 9, dans lequel ladite communication chiffrée est basée sur une cryptographie symétrique.

11. Procédé selon l'une quelconque des revendications précédentes, dans lequel l'application de serveur (230) crée un identifiant de session de transfert de fichier après l'étape « a ».

12. Procédé selon la revendication 11, dans lequel l'application de serveur (230) communique ledit identifiant à la fois à ladite application expéditeur (130) et à ladite application destinataire (330).

13. Procédé selon la revendication 11, dans lequel, lors de l'étape « c », le fichier est stocké dans une zone de mémoire (222) du serveur (220) identifiée par un chemin qui contient le condensé de fichier et/ou l'identifiant de session de transfert.

14. Procédé selon l'une quelconque des revendications précédentes, dans lequel chaque communication sur le réseau télématique (400) entre une application expéditeur (130) et une application de serveur (230) et/ou entre une application destinataire (330) et une application de serveur (230) est basée sur un protocole de communication sécurisé, en particulier HTTPS ou SFTP ou FTPS.
